# FASCICULE DE BREVET EUROPEEN

(11) **EP 1 193 655 B1**
(45) Date de publication et mention de la délivrance du brevet: **25.07.2007**
(21) Numéro de dépôt: 01402464.0
(22) Date de dépôt: 26.09.2001
(51) Int. Cl.: G07B 17/00

(54) **Machine à affranchir polyvalente**
Mehrzweckfrankiermaschine
Multi-purpose franking machine

(30) Priorité: 29.09.2000 FR 0012408
(43) Date de publication de la demande: 03.04.2002
(73) Titulaire: NEOPOST TECHNOLOGIES, 92220 Bagneux (FR)
(72) Inventeur: Deshayes, Xavier, 78290 Croissy (FR); Paul, Arsène, 93310 Pre-St-Gervais (FR)
(74) Mandataire: David, Alain

(56) Documents cités:
- EP-A- 0 718 799
- EP-A- 0 855 683
- EP-A- 0 961 235
- EP-A- 0 996 084
- FR-A- 2 713 804
- GB-A- 2 275 668

## Description

### Domaine de la technique

La présente invention se rapporte exclusivement au domaine du traitement de courrier et elle concerne plus particulièrement une machine à affranchir du type à jet d'encre pouvant imprimer indistinctement articles de courrier et étiquettes.

### Art antérieur

Les machines à affranchir du type à jet d'encre sont bien connues de l'homme de l'art. Elles permettent l'affranchissement d'articles de courrier de différents types (enveloppes, encarts, etc.) comme celui d'étiquettes à humidifier et à coller ensuite sur ces articles ou séparément.

Le document EP 0 718 799 divulgue une machine d'affranchissement avec un dispositif d'impression du type jet d'encre munie également d'un distributeur d'étiquettes. L'empreinte postale peut être placée sur des enveloppes alimentées par la machine ou sur une bande qui est extraite de la machine. Ceci est réalisé en déplaçant le module d'impression entre deux positions d'impression. De plus, il y a une position d'entretien à laquelle le dispositif d'impression est déplacé après un cycle d'impression pour effectuer des opérations de nettoyage et/ou de rechargement de l'encre.

On connaît également depuis déjà quelques années les rubans dits « linerless » qui sont disponibles en rouleaux déroulants notamment pour la distribution de timbres à la demande (voir par exemple le brevet US 5 663 227).

Mais, encore à ce jour personne n'a même songé à ce que cette dernière technique pouvait apporter au domaine du traitement de courrier et plus particulièrement aux machines à affranchir.

### Objet et définition de l'invention

La présente invention a pour but de proposer une nouvelle architecture de machine à affranchir basée sur l'utilisation de cette technique « linerless ». Un but supplémentaire de l'invention est d'accroître la sécurité des données d'affranchissement portées sur l'article de courrier et d'en faciliter la lecture par l'administration postale.

Ces buts sont atteints par une machine pour l'affranchissement d'articles de courrier ou d'étiquettes comprenant une base et un module d'affranchissement relié à cette base, la base comportant des premiers moyens de transport pour convoyer les articles de courrier le long d'un chemin de transport d'articles de courrier, depuis une entrée d'articles de courrier vers ledit module d'affranchissement, et des seconds moyens de transport pour convoyer les étiquettes le long d'un chemin de transport des étiquettes, depuis des moyens distributeur d'étiquettes vers ledit module d'affranchissement, caractérisée en ce que lesdits moyens distributeur comportent au moins un premier rouleau débitant pour la fourniture en bande d'étiquettes autocollantes de type « linerless ».

Cette nouvelle architecture de machine à affranchir utilisant des rubans autocollants s'avère particulièrement intéressante du fait qu'elle évite la présence d'eau au sein de la machine, c'est à dire qu'elle évite la présence d'eau dans un environnement électrique.

Les moyens distributeur comportent en outre un second rouleau débitant pour la fourniture en bande d'étiquettes autocollantes de type « linerless » pourvues de transpondeurs. Ils sont mobiles en translation perpendiculairement aux chemins de transport des articles de courrier et des étiquettes de manière à définir au moins trois positions d'affranchissement. De même, le module d'affranchissement est mobile en translation perpendiculairement au chemin de transport des articles de courrier de manière à définir au moins deux positions d'affranchissement.

Selon un mode de réalisation avantageux, le module d'affranchissement comporte en outre une troisième position d'affranchissement pour l'impression de données postales ou non autres que les données d'affranchissement. Ce module d'affranchissement peut comporter de préférence à la fois un module d'impression à jet d'encre et un module d'écriture sans contact.

De préférence, la bande d'étiquettes autocollantes est entraînée par deux paires de galets amont et aval entre lesquels est disposé un dispositif de coupe du type à ciseaux de sectionnement destiné à sectionner une bande tendue à une longueur déterminée par un dispositif détecteur. Les galets disposés du côté d'une face extérieure de la bande sont motorisés, les deux autres galets faisant fonction de galets presseurs et disposés du côté d'une face intérieure de la bande étant montés fous et recouverts d'une matière peu adhérente pour éviter un collage de la bande d'étiquettes sur ces galets.

La machine à affranchir comporte en outre, disposés successivement en sortie desdits galets aval, un coin de guidage courbe pour incurver le trajet de la bande et un autre galet presseur pour appliquer la bande contre lesdits moyens de transport des étiquettes ou contre lesdits articles de courrier supportés par lesdits moyens de transport des articles de courrier. Pour éviter un collage de la bande d'étiquettes, le coin de guidage courbe et lesdits moyens de transport des étiquettes sont recouverts d'un matériau non adhérent.

### Brève description des dessins

D'autres caractéristiques et avantages de la présente invention ressortiront mieux de la description suivante, faite à titre indicatif et non limitatif, en regard des dessins annexés, sur lesquels :
- la figure 1 est une vue partielle d'une machine à affranchir selon l'invention dans une première position d'impression d'une étiquette,
- la figure 2 est une vue partielle d'une machine à affranchir selon l'invention dans une deuxième position d'impression d'une étiquette,
- la figure 3 est une vue partielle d'une machine à affranchir selon l'invention dans une troisième position d'impression d'une étiquette,
- la figure 4 est une vue partielle d'une machine à affranchir selon l'invention dans une quatrième position d'impression d'une étiquette,
- la figure 5 est une vue partielle d'une machine à affranchir selon l'invention dans une première position d'écriture d'une étiquette,
- la figure 6 est une vue partielle d'une machine à affranchir selon l'invention dans une seconde position d'écriture d'une étiquette,
- la figure 7 est une vue partielle d'une machine à affranchir selon l'invention dans une première position d'impression d'une enveloppe,
- la figure 8 est une vue partielle d'une machine a affranchir selon l'invention dans une deuxième position d'impression d'une enveloppe,
- la figure 9 est une vue partielle d'une machine à affranchir selon l'invention dans une troisième position d'impression d'une enveloppe, et
- la figure 10 est une vue partielle d'une machine à affranchir selon l'invention dans une première position d'écriture d'une enveloppe.

### Description détaillée de modes de réalisation préférentiels de l'invention

Classiquement une machine à affranchir est formée d'une base et d'un module d'affranchissement relié à cette base. La base comporte des moyens de transport (rouleaux ou courroie) pour convoyer les articles de courrier au travers de la machine depuis une entrée d'article de courrier le long d'un chemin de transport des articles de courrier, des moyens de comptabilisation des affranchissements effectués (compteurs ascendant et descendant notamment), des moyens d'entrée de données et de types d'affranchissement (au travers d'une interface utilisateur par exemple), et éventuellement des moyens de recharge d'un crédit d'affranchissement (par téléchargement ou module spécifique). De façon facultative, la base peut aussi comporter un dispositif de distribution et de transport d'étiquettes au travers de la machine. Le chemin de transport des étiquettes peut correspondre en partie ou non au chemin de transport des articles de courrier. Le module d'affranchissement comporte de préférence plusieurs têtes d'affranchissement (comportant dans la technologie à jet d'encre chacune une ou plusieurs rangées de buses d'éjection selon les dimensions à imprimer) et au moins des moyens mémoire pour emmagasiner notamment des paramètres de fonctionnement de ces têtes. Bien entendu, d'autres technologies d'impression sont envisageables (report d'encre, transfert thermique...), avec éventuellement un ensemble principal d'impression associé à un ensemble secondaire d'impression. Le module d'affranchissement peut être de type conventionnel (donc rechargeable auprès de l'administration postale) ou de type jetable et relié alors à la base par une liaison de type sécurisée.

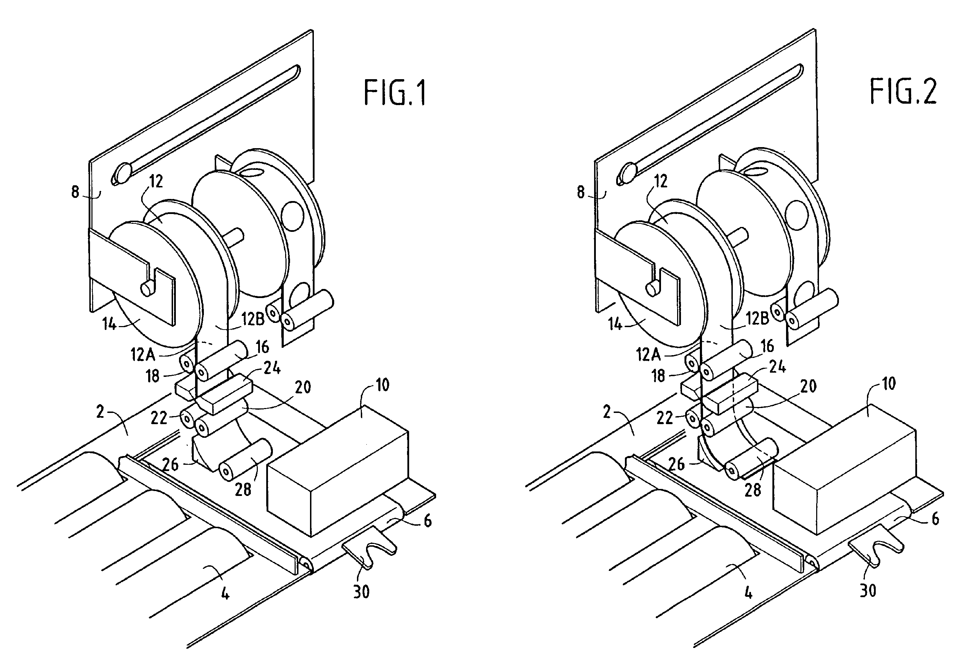

La figure 1 représente de façon schématique et très partielle (limitée à la zone d'impression) une machine à affranchir selon l'invention. On reconnaît la base 2 avec ses moyens 4, 6 de transport des articles de courrier et des étiquettes. Ces étiquettes sont délivrées par un distributeur d'étiquettes 8 solidaire de la base. Un module d'affranchissement constitué d'un module d'impression à jet d'encre 10 est bien entendu également prévu pour imprimer les données d'affranchissement (empreinte postale) sur les étiquettes ou les articles de courrier. Ce module d'impression peut aussi servir à l'impression sur les articles de courrier de toutes les autres données postales ou non postales nécessaires à l'expédition (adresse de distribution), la valorisation (message d'avertissement ou publicitaire quelconque par exemple), le tri (code à barres), le suivi (nature du transporteur) et le contrôle de ces articles. Le module d'alimentation en articles de courrier et les moyens de commande générale de la machine qui sont bien connus de l'homme de l'art ne seront pas décrits ni représentés bien que nécessairement présents.

Selon l'invention, cette machine à affranchir cst pourvue d'un distributeur d'étiquettes autocollantes (linerless type), c'est à dire d'étiquettes dépourvues d'un film siliconé de décollement. Ces étiquettes 12 qui comportent une face intérieure adhésive 12A et une face extérieure non adhésive 12B peuvent être débitées en bande, continue ou prédécoupée, depuis un premier rouleau débitant 14, la face adhésive étant destinée à être collée automatiquement ou manuellement (cas des colis postaux par exemple) sur l'article de courrier a expédier et la face non adhésive étant destinée à être directement imprimée par la tête d'impression 10. Bien entendu, cette face non adhésive 12B doit être compatible avec une impression jet d'encre.

La bande d'étiquettes « linerless » est entraînée par deux paires de galets amont 16, 18 et aval 20, 22 entre lesquels est disposé un dispositif de coupe 24 du type à ciseaux de sectionnement. Le dispositif de coupe est positionné entre les deux paires de galets pour pouvoir sectionner une bande tendue à une longueur bien déterminée et contrôlée de façon conventionnelle par un dispositif détecteur (non représenté) comme un codeur ou un capteur de position mécanique ou optique monté par exemple sur le rouleau 14.

Les galets 16, 20 disposés du côté de la face extérieure de la bande sont motorisés et commandés par un moteur (non représenté), les deux autres galets 18, 22 faisant fonction de galets presseurs et disposés du coté de la face intérieure de la bande étant montés fous et recouverts d'une matière peu adhérente (film de silicone ou de Téflon® par exemple) pour éviter un collage de la bande sur ces galets. En sortie des galets, sont disposés successivement un coin de guidage courbe 26 pour incurver le trajet de la bande et un autre galet presseur 28 destiné ensuite à appliquer la bande sur la courroie sans fin 6 motorisée également par le moteur.

Comme les premier et deuxième galets presseurs 18, 22, le coin de guidage courbe 26 et la courroie sans fin 6 sont recouverts d'un matériau non adhérent. L'ensemble de ces éléments est bien entendu monté dans la base et fixé à celle-ci de façon connue en soi et qu'il n'est dès lors pas nécessaire de décrire.

Les figures 2 à 4 illustrent le fonctionnement de la machine à affranchir selon l'invention lors de l'impression d'étiquettes destinées à être appliquées manuellement sur des colis postaux.

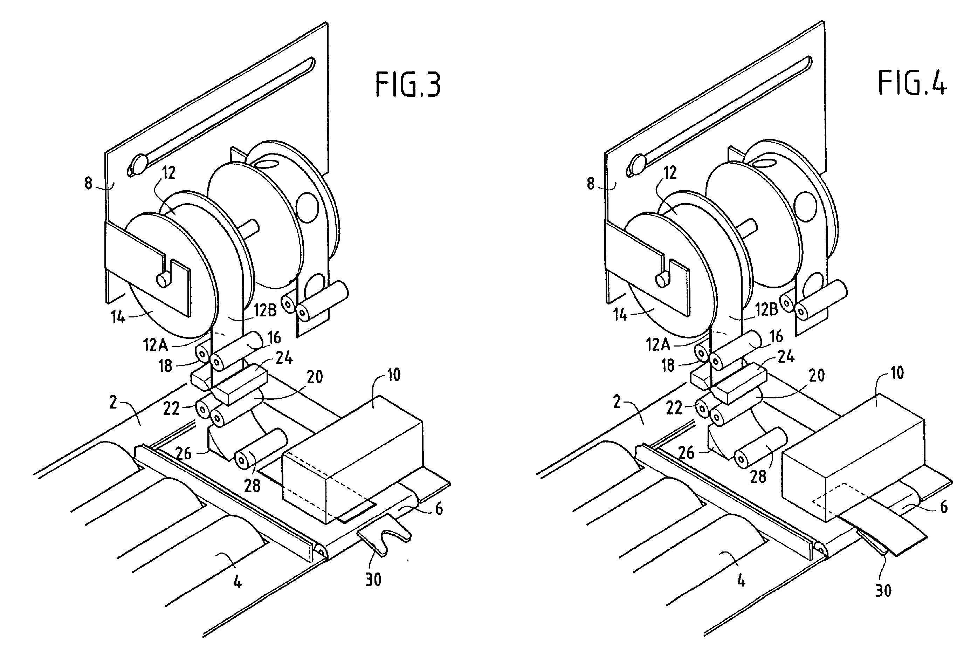

Sur la figure 2, la bande d'étiquettes « linerless» 12 a été déroutée du rouleau débitant 14 sur une longueur déterminée correspondant au sectionnement souhaité. On note que le coin de guidage courbe 26 incurve la bande vers le troisième galet presseur 28 qui va l'appliquer contre la courroie sans fin 6. Le mouvement continu de la courroie sans fin associé à l'action de ce galet presseur va maintenir l'étiquette sectionnée contre la courroie avec une adhérence suffisante pour permettre ensuite une impression de qualité au niveau du module d'impression 10 (voir la figure 3). Cette impression est réalisée à la volée, c'est-à-dire sans arrêt de la courroie 6. Une fois l'impression réalisée, l'étiquette est amenée, dans la position de la figure 4 où l'utilisateur peut la saisir pour la coller ensuite sur le colis postal auquel elle est destinée (cette saisie étant facilitée d'une part par un support de préhension 30 solidaire de la base et d'autre part par le fonctionnement en roue libre de la courroie dans cette position de saisie).

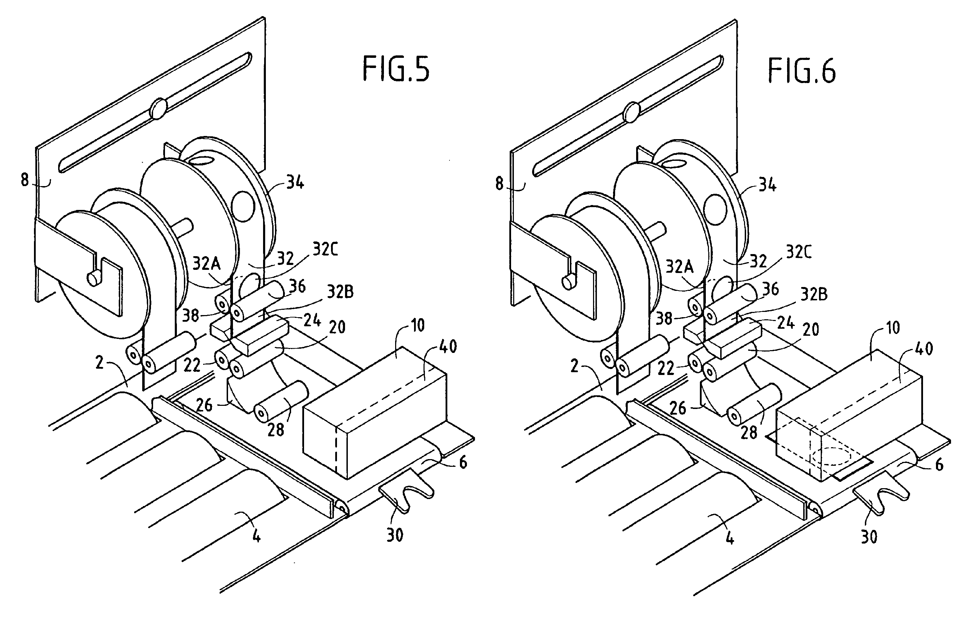

La figure 5 illustre un second mode de réalisation de la machine à affranchir selon l'invention dans lequel le distributeur d'étiquettes 8, monté mobile en translation sur la base 2, comporte un second rouleau débitant 34 permettant de dérouler des étiquettes autocollantes à transpondeur 32. De telles étiquettes « linerless » spéciales sont connues du brevet US 6 019 865. Elles comportent une face intérieure adhésive 32A et une face extérieure non adhésive 32B. Elles sont débitées en bande continue, la face adhésive étant destinée à être collée automatiquement ou manuellement (cas des colis postaux par exemple) sur l'article de courrier à expédier. Entre les deux faces de cette étiquette 32 est monté un microcircuit électronique à mémoire 32C appelé « transpondeur » et qui est destiné à recevoir au moins les données d'affranchissement habituellement présentes sur l'empreinte postale de l'article de courrier à expédier.

Comme pour le mode de réalisation précédent, la bande d'étiquettes autocollantes est entraînée par deux paires de galets amont et aval entre lesquels est disposé un dispositif de coupe du type à ciseaux de sectionnement. Avantageusement, le dispositif de coupe 24 et les galets aval 20, 22 sont ceux utilisés avec le premier rouleau débitant 14, des galets amont 36, 38 mobiles en translation avec le distributeur étant disposés juste en sortie du rouleau débitant 34. De même, comme précédemment, en sortie de ces deux paires de galets, sont disposés successivement le coin de guidage courbe 26 pour incurver le trajet de la bande et le troisième galet presseur 28.

La position d'affranchissement de ce second mode de réalisation est illustrée à la figure 6. Il s'agit ici d'une position d'écriture dans le transpondeur 32C. Cette inscription dans la mémoire (de type RAM ou EEPROM) du microcircuit électronique est effectuée à distance (sans contact) au travers d'un module d'écriture 40 en lieu et place du module d'impression 10 précité. Cette inscription sans contact est aussi effectuée « au vol ». De préférence, bien entendu, et comme illustré, ces deux modules d'impression et d'écriture peuvent cohabiter cote à cote dans la zone d'impression. Une fois la procédure d'écriture dans le microcircuit (et éventuellement de lecture associée) achevée, l'étiquette est avancée sur le support de préhension 30 pour être saisie par l'utilisateur.

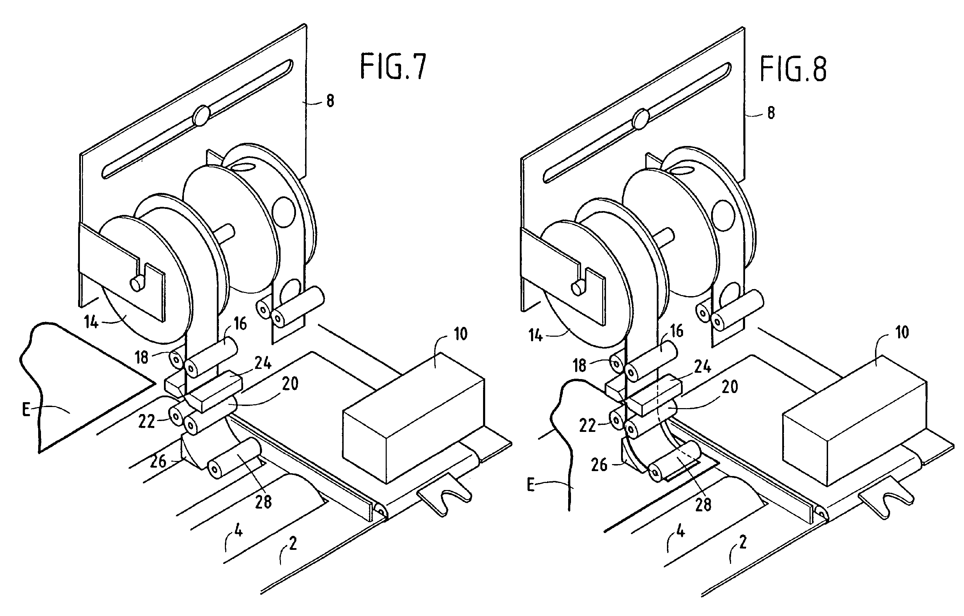

Ces procédures d'impression ou d'écriture sur une étiquette « linerless » avec ou sans transpondeur peuvent bien entendu aussi s'appliquer automatiquement sur un article de courrier. Les figures 7 à 9 et 10 respectivement illustrent ces deux variantes de réalisation.

Sur la figure 7, des étiquettes « linerless » sont déroulées du premier rouleau débitant 14 et sont guidées vers un article de courrier, par exemple une enveloppe E, par les deux paires de galets amont 16, 18 et aval 20, 22 entre lesquels est disposé le dispositif de coupe du type à ciseaux de sectionnement 24. Pour cela, le dispositif de coupe et les galets aval sont rendus mobiles en translation perpendiculairement au déplacement de l'enveloppe de façon à venir occuper une position adéquate par rapport à cette enveloppe.

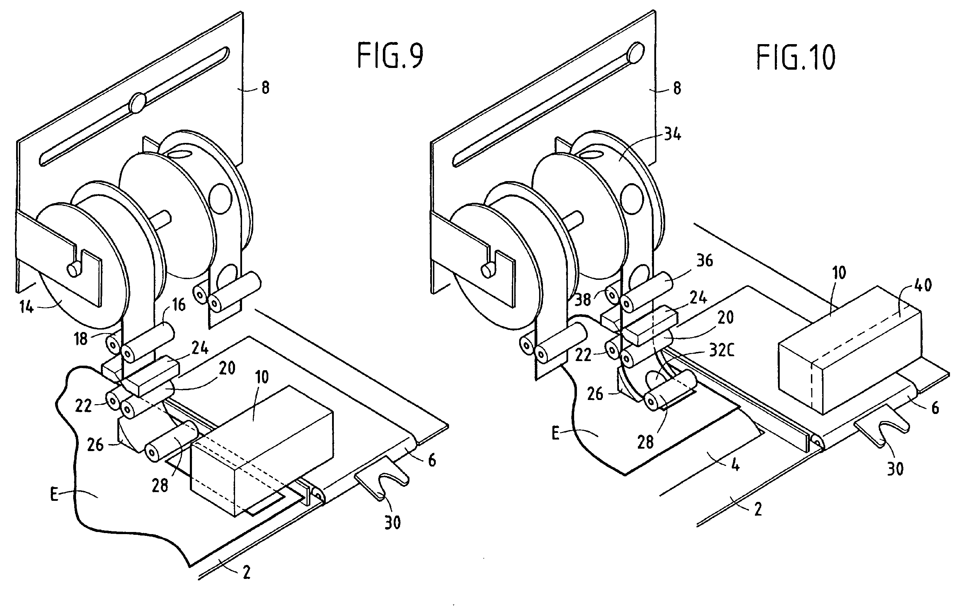

Dans la position de la figure 8, le rouleau a été débité d'une longueur déterminée et l'enveloppe s'est avancée d'une distance correspondante pour recevoir l'extrémité avant de cette étiquette qui se retrouve alors directement collée sur l'enveloppe par le troisième rouleau presseur 28 (et sans aucun apport d'eau par des moyens mouilleur quelconque). On se dispense de la présence d'un dispositif de mouillage, ce qui constitue un avantage déterminant pour des raisons techniques et économiques. Sur la figure 9, l'étiquette en position sous le module d'impression 10 (qui aura préalablement fait l'objet d'un déplacement en translation de sa position initiale d'impression d'étiquettes) a été sectionnée et est maintenant entièrement collée sur l'enveloppe qui est lors prête à être dirigée vers un module externe la machine à affranchir par exemple un module de stockage.

La figure 10 illustre une dernière variante de réalisation de la machine à affranchir correspondant à l'inscription de données d'affranchissement dans le microcircuit 32C d'une étiquette « linerless à transpondeur » débitée par le second rouleau débitant 34 et destinée à être collée automatiquement sur un article de courrier, par exemple une enveloppe E. Par rapport à la configuration précédente, on notera le nouveau déplacement transversal du distributeur 6 pour amener le second rouleau débitant 34 sur le chemin de transport des articles de courrier.

Ainsi, le distributeur peut occuper trois positions distinctes transversalement à la direction de déplacement des articles de courrier lui permettant d'assurer les quatre fonctionnalités précédentes
- dans une première position (figure 1), il permet seulement l'impression d'étiquettes « linerless » seules.
- dans une seconde position, il permet soit l'inscription sur des étiquettes « linerless » pourvues de transpondeur (figure 5) soit l'impression d'étiquettes « linerless » collées sur des articles de courrier (figure 7),
- dans une troisième position (figure 10), il permet l'inscription sur des étiquettes « linerless » pourvues de transpondeur et collées sur des articles de courrier.

Avec cette polyvalence dans la distribution des étiquettes, la machine à affranchir de l'invention peut effectuer des affranchissements de différentes manières :
- en imprimant conventionnellement des empreintes postales contenant toutes les données d'information envisageables,
- en produisant des étiquettes imprimées contenant diverses informations d'affranchissement, et prêtes à être collées manuellement sur des colis ou des grosses enveloppes.
- en produisant des étiquettes semblables aux précédentes mais équipées d'un transpondeur dans lequel sont enregistrées toutes les données d'affranchissement et également prêtes à l'emploi,
- en collant automatiquement l'un ou l'autre de ces deux types d'étiquettes « linerless »sur les enveloppes avant la phase d'affranchissement (impression ou inscription).

## Revendications

1. Machine à affranchir pour l'affranchissement d'articles de courrier ou d'étiquettes comprenant une base (2) et un module d'affranchissement (10, 40) relié à cette base, la base comportant des premiers moyens de transport (4) pour convoyer les articles de courrier le long d'un chemin de transport d'articles de courrier, depuis une entrée d'articles de courrier vers ledit module d'affranchissement, et des seconds moyens de transport (6) pour convoyer les étiquettes le long d'un chemin de transport des étiquettes, depuis des moyens distributeur d'étiquettes (8) vers ledit module d'affranchissement, **caractérisée en ce que** lesdits moyens distributeur comportent un premier rouleau débitant (14) pour la fourniture en bande d'étiquettes autocollantes (12) de type « linerless » et un second rouleau débitant (34) pour la fourniture en bande d'étiquettes autocollantes (32) de type « linerless » pourvues de transpondeurs (32C).

2. Machine à affranchir selon la revendication 1, **caractérisée en ce que** lesdits moyens distributeur sont mobiles en translation perpendiculairement aux chemins de transport des articles de courrier et des étiquettes de manière à définir au moins trois positions distinctes.

3. Machine à affranchir selon la revendication 1, **caractérisée en ce que** ledit module d'affranchissement est mobile en translation perpendiculairement au chemin de transport des articles de courrier de manière à définir au moins deux positions d'affranchissement.

4. Machine à affranchir selon la revendication 3, **caractérisée en ce que** ledit module d'affranchissement comporte en outre des moyens pour l'impression de données postales ou non autres que les données d'affranchissement.

5. Machine à affranchir selon la revendication 1, **caractérisée en ce que** ledit module d'affranchissement comporte à la fois un module d'impression à jet d'encre (10) et un module d'écriture sans contact (40).

6. Machine à affranchir selon la revendication 1, **caractérisée en ce que** ladite bande d'étiquettes autocollantes est entraînée par deux paires de galets amont (16, 18 ; 36, 38) et aval (20, 22) entre lesquels est disposé un dispositif de coupe (24, 34) du type à ciseaux de sectionnement destiné à sectionner une bande tendue à une longueur déterminée par un dispositif détecteur.

7. Machine à affranchir selon la revendication 6, **caractérisée en ce que** les galets (16 ; 36, 20) disposés du côté d'une face extérieure de la bande (12B ; 32B) sont motorisés, les deux autres galets (18 ; 38, 22) faisant fonction de galets presseurs et disposés du côté d'une face intérieure de la bande (12A ; 32B) étant montés fous et recouverts d'une matière peu adhérante pour éviter un collage de la bande d'étiquettes sur ces galets.

8. Machine à affranchir selon la revendication 6, **caractérisée en ce qu'**elle comporte en outre, disposés successivement en sortie desdits galets aval, un coin de guidage courbe (26) pour incurver le trajet de la bande et un autre galet presseur (28) pour appliquer la bande contre lesdits moyens de transport des étiquettes ou contre lesdits articles de courrier supportés par lesdits moyens de transport des articles de courrier.

9. Machine à affranchir selon la revendication 8, **caractérisée en ce que** ledit coin de guidage courbe et lesdits moyens de transport des étiquettes sont recouverts d'un matériau non adhérent.

## Claims

1. Machine for franking mailpieces or labels, comprising a base (2) and a franking module (10, 40) connected to this base, the base comprising first transport means (4) for conveying the mailpieces along a mailpiece-conveying path, from a mailpiece inlet towards said franking module, and second transport means (6) for conveying the labels along a label-conveying path, from label dispensing means (8) towards said franking module, the machine being **characterised in that** said dispensing means comprise a first delivery roll (14) for supplying a band of self-adhesive labels (12) of linerless type, and a second delivery roll (34) for supplying a band of self-adhesive labels (32) of linerless type provided with transponders (32C).

2. The franking machine according to claim 1, **characterised in that** said dispensing means are mobile in translation perpendicularly to the mailpiece- and label-conveying paths so as to define at least three distinct positions.

3. The franking machine according to claim 1, **characterised in that** said franking module is mobile in translation perpendicularly to the mailpiece-conveying path so as to define at least two positions of franking.

4. The franking machine according to claim 3, **characterised in that** said franking module further comprises means for printing postal or non-postal indicia other than the franking data.

5. The franking machine according to claim 1, **characterised in that** said franking module comprises both an ink jet printing module (10) and a contactless writing module (40).

6. The franking machine according to claim 1, **characterised in that** said band of self-adhesive labels is driven by two pairs of upstream (16, 18; 36, 38) and downstream (20, 22) rollers, between which is arranged a cutting device (24, 34) of the severing type intended to sever a taut band to a length determined by a detector.

7. The franking machine according to claim 6, **characterised in that** the rollers (16; 36, 20) arranged on the outer face side of the band (12B; 32B) are motorized, the two other rollers (18; 38, 22) acting as presser rollers and disposed on the inner face side of the band (12B; 32B) being mounted idle and coated with a hardly adherent material in order to avoid the band of labels sticking on these rollers.

8. The franking machine according to claim 6, **characterised in that** it further comprises, arranged successively at the outlet of said downstream rollers, a curved guiding wedge (26) for deviating the path of the band and another presser roller (28) for applying the band against said label-conveying means or against said mailpieces supported by said mailpiece-conveying means.

9. The franking machine according to claim 8, **characterised in that** said curved guiding wedge and said label-conveying means are coated with a non-adherent material.

## Patentansprüche

1. Frankiermaschine zum Frankieren von Postartikeln oder Etiketten, umfassend eine Basis (2) und ein Frankiermodul (10, 40), das mit dieser Basis verbunden ist, wobei die Basis erste Fördermittel (4), um die Postartikel entlang eines Postartikelförderweges von einem Postartikeleingang zu dem Frankiermodul zu befördern, und zweite Fördermittel (6) umfaßt, um die Etiketten entlang eines Etikettenförderweges von Etikettenverteilungsmitteln (8) zu dem Frankiermodul zu befördern, **dadurch gekennzeichnet, daß** die Verteilungsmittel eine erste Abwickelrolle (14), um Selbstklebeetiketten (12) vom Typ "linerless" in Bandform zu liefern, und eine zweite Abwickelrolle (34) umfassen, um Selbstklebeetiketten (32) vom Typ "linerless", die mit Transpondern (32C) versehen sind, zu liefern.

2. Frankiermaschine nach Anspruch 1, **dadurch gekennzeichnet, daß** die Verteilungsmittel senkrecht zu den Postartikel- und Etikettenförderwege in Translation beweglich sind, um wenigstens drei unterschiedliche Positionen zu definieren.

3. Frankiermaschine nach Anspruch 1, **dadurch gekennzeichnet, daß** das Frankiermodul senkrecht zu dem Postartikelförderweg in Translation beweglich ist, um wenigstens zwei Frankierpositionen zu definieren.

4. Frankiermaschine nach Anspruch 3, **dadurch gekennzeichnet, daß** das Frankiermodul ferner Mittel zum Aufdrucken von Postdaten oder anderen Daten als die Frankierdaten umfaßt.

5. Frankiermaschine nach Anspruch 1, **dadurch gekennzeichnet, daß** das Frankiermodul sowohl ein Tintenstrahldruckmodul (10) als auch ein kontaktloses Schreibmodul (40) umfaßt.

6. Frankiermaschine nach Anspruch 1, **dadurch gekennzeichnet, daß** das Selbstklebeetikettenband von zwei stromaufwärtigen (16, 18; 36, 38) und stromabwärtigen (20, 22) Rollenpaaren angetrieben wird, zwischen denen eine Schneidvorrichtung (24, 34) vom Typ mit Trennscheren angeordnet ist, die dazu bestimmt ist, ein gespanntes Band mit einer von einer Erfassungsvorrichtung bestimmten Länge abzutrennen.

7. Frankiermaschine nach Anspruch 6, **dadurch gekennzeichnet, daß** die Rollen (16; 36, 20), die auf der Seite einer Außenfläche des Bandes (12B; 32B) angeordnet sind, motorisiert sind, wobei die beiden anderen Rollen (18; 38, 22), die als Druckrollen dienen und auf der Seite einer Innenfläche des Bandes (12A; 32B) angeordnet sind, frei befestigt und mit einem schwach haftenden Material überzogen sind, um ein Kleben des Etikettenbandes auf diesen Rollen zu vermeiden.

8. Frankiermaschine nach Anspruch 6, **dadurch gekennzeichnet, daß** sie ferner, nacheinander am Ausgang der stromabwärtigen Rollen angeordnet, einen gekrümmten Führungswinkel (26), um die Bahn des Bandes zu biegen, und eine weitere Druckrolle (28) umfaßt, um das Band an die Fördermittel der Etiketten oder an die Postartikel anzulegen, die von den Postartikelfördermitteln getragen werden.

9. Frankiermaschine nach Anspruch 8, **dadurch gekennzeichnet, daß** der gekrümmte Führungswinkel und die Etikettenfördermittel mit einem nicht haftenden Material überzogen sind.
